# EUROPÄISCHE PATENTSCHRIFT

(11) **EP 1 884 429 B1**
(45) Veröffentlichungstag und Bekanntmachung des Hinweises auf die Patenterteilung: **29.03.2017**
(21) Anmeldenummer: 07014783.0
(22) Anmeldetag: 27.07.2007
(51) Int. Cl.: B60T 17/02

(54) **Druckluftaufbereitungseinrichtung zum Versorgen einer Kraftfahrzeugbremsanlage mit Druckluft**
Compressed air treatment device for supplying compressed air to the braking system of a motor vehicle
Dispositif de préparation de l'air comprimé destiné à alimenter une installation de freinage d'un véhicule automobile avec de l'air comprimé

(30) Priorität: 27.07.2006 DE 102006034761
(43) Veröffentlichungstag der Anmeldung: 06.02.2008
(73) Patentinhaber: KNORR-BREMSE Systeme für Nutzfahrzeuge GmbH, 80809 München (DE)
(72) Erfinder: Riedel, Markus, 81375 München (DE); Ertl, Thomas, 80995 München (DE)
(74) Vertreter: Mattusch, Gundula

(56) Entgegenhaltungen:
- WO-A-2005/025958
- DE-A1- 19 835 638
- DE-C1- 19 544 621

## Beschreibung

Die Erfindung betrifft eine Druckluftaufbereitungseinrichtung zum Versorgen einer Kraftfahrzeugbremsanlage mit Druckluft, mit zwei zur Versorgung einer Betriebsbremsanlage vorgesehenen Betriebsbremsanschlüssen, einem Nebenverbraucherventil zum Steuern der Druckluftzufuhr an zumindest einen Nebenverbraucheranschluss, einem Nebenverbraucher-Vorsteuerventil, um einem Steuereingang des Nebenverbraucherventils wahlweise Druckluft über eine Seriellversorgungsleitung zuzuführen, wobei die Seriellversorgungsleitung mit einem Verbindungspunkt verbunden ist, der mit beiden Betriebsbremsanschlüssen verbunden ist.

Aus der DE 198 35 638 A1 ist eine Druckluftaufbereitungseinrichtung bekannt. Bei dieser Schaltung ist ein Druckbegrenzer zwischen der Drucksteuereinheit und dem Druck-regelausgang vorgesehen, der auch im stromlosen Zustand den Druck auf einen vorgegebenen Ausgangsdruck begrenzt. Ferner ist es möglich in den einzelnen Verbraucherkreisen mit unterschiedlichen Drücken zu arbeiten. Die einzelnen Verbraucherkreise sind dabei parallel an die Hauptversorgungsleitung angeschlossen.

Auch aus der DE 195 44 621 C1 ist eine Druckluftaufbereitungseinrichtung bekannt. Die einzelnen Verbraucherkreise sind wiederum parallel an die Versorgungsleitung angeschlossen.

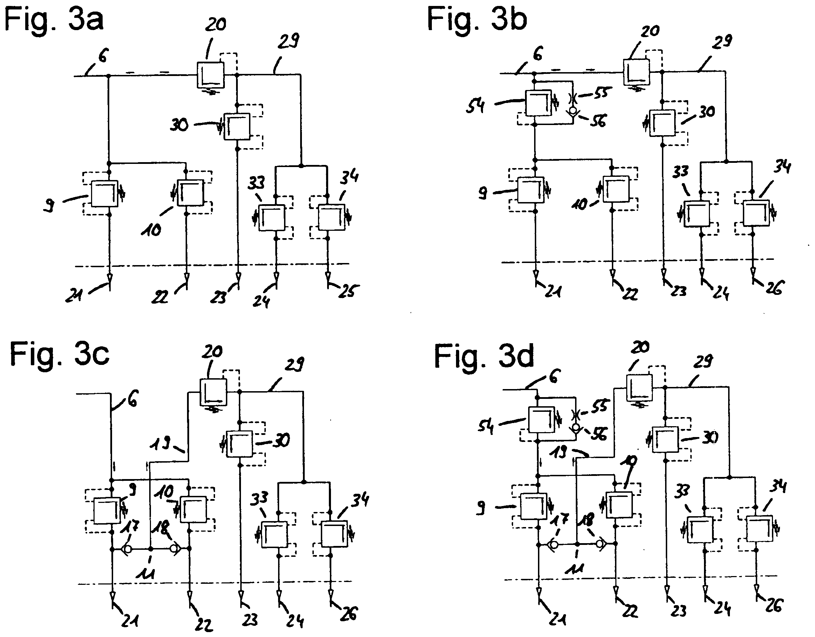

Aus der DE 103 41 723 A1 ist ebenfalls eine gattungsgemäße Druckluftaufbereitungseinrichtung bekannt. Bei der dort in Figur 3 dargestellten Druckluftaufbereitungseinrichtung ist eine Seriellversorgungsleitung mittels eines Wechselventils 80 mit den beiden Betriebsbremsanschlüssen 21 und 22 verbunden. Bei einem derartigen Aufbau besteht die Gefahr, dass bei einem geringfügigen Leck in einem der beiden Betriebsbremskreise der andere Betriebsbremskreis in Mitleidenschaft gezogen wird. Eine geringfügige Leckage hat nämlich zur Folge, dass im entsprechenden Bremskreis immer noch Druck vorhanden ist, auch wenn dieser leicht vermindert ist. Der nur leicht verminderte Druck in einem der Bremskreise lässt nicht zu, dass das Wechselventil 80 diesen Bremskreis komplett verschließt, so dass die Möglichkeit besteht, dass von dem intakten Bremskreis über das Wechselventil 80 Luft in den eine Leckage aufweisenden Bremskreis überströmt.

Es ist daher die Aufgabe der vorliegenden Erfindung die gattungsgemäße Druckluftaufbereitungseinrichtung derart weiterzubilden, dass das vorstehende Problem gelöst wird.

Diese Aufgabe wird durch die Druckluftaufbereitungseinrichtung gemäß Anspruch 1 gelöst.

Vorteilhafte Ausgestaltungen und Weiterbildungen der Erfindung ergeben sich aus den abhängigen Ansprüchen.

Die erfindungsgemäße Druckluftaufbereitungseinrichtung baut auf dem gattungsgemäßen Stand der Technik dadurch auf, dass jeweils zwischen den Betriebsbremsanschlüssen und dem Verbindungspunkt ein Rückschlagventil vorgesehen ist. Durch diesen Aufbau wird ein Überströmen von Druckluft von einem intakten Bremskreis zu einem möglicherweise leicht leckenden Bremskreis gänzlich unterbunden. Dies führt zu einer sicheren Bremskraftbereitstellung und einer Druckluftaufbereitungseinrichtung mit verbesserter Effizienz, da eine Leckage, wenn diese auch sehr klein ist, vollständig abgeschlossen wird. Ein weiterer Vorteil dieser Schaltung ist, dass bei Verwendung der später erläuterten "Northland Parkbrake Function" insbesondere das Nebenverbraucher-Vorsteuerventil aus Betriebsbremsbehältern, die im Betrieb an die Betriebsbremsanschlüsse angeschlossen sind, mit Druckluft versorgt werden kann, wenn der Druck in der Druckluftanlage, nachdem das Fahrzeug abgestellt wurde, durch geringe Undichtigkeiten unter die Schließdrücke von Kreissicherungsventilen, vorzugsweise Überströmventile, abgesunken ist.

Die erfindungsgemäße Druckluftaufbereitungseinrichtung kann in vorteilhafter Weise dadurch weitergebildet sein, dass den Betriebsbremsanschlüssen jeweils ein Betriebsbremsventil vorgeschaltet ist, das so angeordnet ist, dass dessen den Betriebsbremsanschlüssen zugewandte Ausgangsseite mit dem Verbindungspunkt verbunden ist. Diese Ventile können zum Absichern der Betriebsbremskreise bei auftretender Leckage dienen.

Bei einer bevorzugten Ausführungsform der erfindungsgemäßen Druckluftaufbereitungseinrichtung ist weiterhin vorgesehen, dass die Betriebsbremsventile Überströmventile sind. Durch Überströmventile vor den Betriebsbremskreisen ist eine sichere Möglichkeit zum Absichern der Betriebsbremskreise gegeben. Sobald eine Leckage auftritt fällt der Druck im entsprechenden Leitungsstrang unter den Schließdruck des Überströmventils, so dass das Überströmventil schließt und den entsprechenden Betriebsbremskreis von einer Druckluftversorgungsleitung trennt.

Darüber hinaus kann bei der erfindungsgemäßen Druckluftaufbereitungseinrichtung vorgesehen sein, dass eine Eingangsseite eines dem Nebenverbraucheranschluss vorgeschalteten Nebenverbraucher-Druckbegrenzers an die Seriellversorgungsleitung gekoppelt ist. Hierdurch wird der Vorteil erreicht, dass Verbraucher, die dem Nebenverbraucher-Druckbegrenzer nachgeschaltet sind, aus Betriebsbremsbehältern, die im Betrieb an die Betriebsbremsanschlüsse angeschlossen sind, mit Druckluft versorgt werden können, wenn der Druck in der Druckluftanlage, nachdem das Fahrzeug abgestellt wurde, durch geringe Undichtigkeiten unter die Schließdrücke von Kreissicherungsventilen abgesunken ist.

Des Weiteren kann die erfindungsgemäße Druckluftaufbereitungseinrichtung so weitergebildet sein, dass eine Eingangsseite eines dem Nebenverbraucheranschluss vorgeschalteten Nebenverbraucher-Druckbegrenzers an eine Hauptleitung gekoppelt ist. Durch einen derartigen Aufbau kann eine schnelle Versorgung aller Verbraucher sichergestellt werden.

Darüber hinaus kann die erfindungsgemäße Druckluftaufbereitungseinrichtung so weitergebildet sein, dass ein Zusatzverbraucheranschluss und ein Getriebeschaltungsanschluss parallel zueinander an die Ausgangsseite des Nebenverbraucher-Druckbegrenzers gekoppelt sind. Durch die Nachschaltung dieser Verbraucher werden diese mit einem verringerten Druckniveau versorgt. Somit kann der Forderung von Fahrzeugherstellern, unterschiedliche Druckniveaus bereitzustellen, Rechnung getragen werden.

Aus demselben Grund kann es vorteilhaft sein, dass ein Zusatzverbraucheranschluss und ein Getriebeschaltungsanschluss vorgesehen sind, wobei eine Zuleitung zu dem Zusatzverbraucheranschluss an die Ausgangsseite des Nebenverbraucher-Druckbegrenzers gekoppelt ist und eine Zuleitung zu dem Getriebeschaltungsanschluss mit der Eingangsseite des Nebenverbraucher-Druckbegrenzers verbunden ist. Diese Anordnung stellt ein höheres Druckniveau für die Getriebeschaltung bereit, wohingegen für die übrigen Verbraucher ein verringertes Druckniveau bereitgestellt wird.

Des Weiteren kann die erfindungsgemäße Druckluftaufbereitungseinrichtung dadurch weitergebildet sein, dass ein Zusatzverbraucheranschluss und ein Getriebeschaltungsanschluss vorgesehen sind, wobei die Zuleitung zu einem der beiden Anschlüsse an eine Ausgangsseite eines Ventils gekoppelt ist, welches dem anderen der beiden Anschlüsse vorgeschaltet ist. Durch eine derartige Anordnung kann die Versorgung eines Verbrauchers mit einer höheren Priorität als die Versorgung eines anderen Verbrauchers ausgestattet werden. Hierdurch erreicht man eine variable Bevorrechtung zweier Druckluftausgänge zueinander.

Ferner kann die Druckluftaufbereitungseinrichtung so ausgebildet sein, dass der Nebenverbraucheranschluss zumindest einen Anschluss aus der Gruppe aufweist, die einen Anhängeranschluss zur Versorgung einer Anhängerbremsanlage mit Druckluft und einen Feststellbremsenanschluss zur Versorgung einer Feststellbremse zum Lösen dieser, umfasst. Hierdurch ist eine Konkretisierung der vorgesehenen Verbraucher angegeben.

Des Weiteren stellt die Erfindung ein Kraftfahrzeug mit einer erfindungsgemäßen Druckluftaufbereitungseinrichtung bereit. Dieses Fahrzeug liefert die vorstehend beschriebenen Vorteile in übertragener Weise.

Eine bevorzugte Ausführungsform der Erfindung wird nachfolgend mit Bezug auf die begleitenden Zeichnungen beispielhaft erläutert.

Es zeigen:
- Figur 1: ein Schaltungsdiagramm eines ersten Ausführungsbeispiels einer erfindungsgemäßen Druckluftaufbereitungseinrichtung;
- Figur 2: ein Schaltungsdiagramm eines zweiten Ausführungsbeispiels einer erfindungsgemäßen Druckluftaufbereitungseinrichtung;
- Figur 3a: eine Schaltungsvariante der Schaltungen des ersten und zweiten Ausführungsbeispiels;
- Figur 3b: eine weitere Schaltungsvariante der Schaltungen des ersten und zweiten Ausführungsbeispiels;
- Figur 3c: eine weitere Schaltungsvariante der Schaltungen des ersten und zweiten Ausführungsbeispiels;
- Figur 3d: eine weitere Schaltungsvariante der Schaltungen des ersten und zweiten Ausführungsbeispiels;
- Figur 4a: eine weitere Schaltungsvariante der Schaltungen des ersten und zweiten Ausführungsbeispiels;
- Figur 4b: eine weitere Schaltungsvariante der Schaltungen des ersten und zweiten Ausführungsbeispiels;
- Figur 4c: eine weitere Schaltungsvariante der Schaltungen des ersten und zweiten Ausführungsbeispiels;
- Figur 5a: eine weitere Schaltungsvariante der Schaltungen des ersten und zweiten Ausführungsbeispiels;
- Figur 5b: eine weitere Schaltungsvariante der Schaltungen des ersten und zweiten Ausführungsbeispiels; und
- Figur 5c: eine weitere Schaltungsvariante der Schaltungen des ersten und zweiten Ausführungsbeispiels.

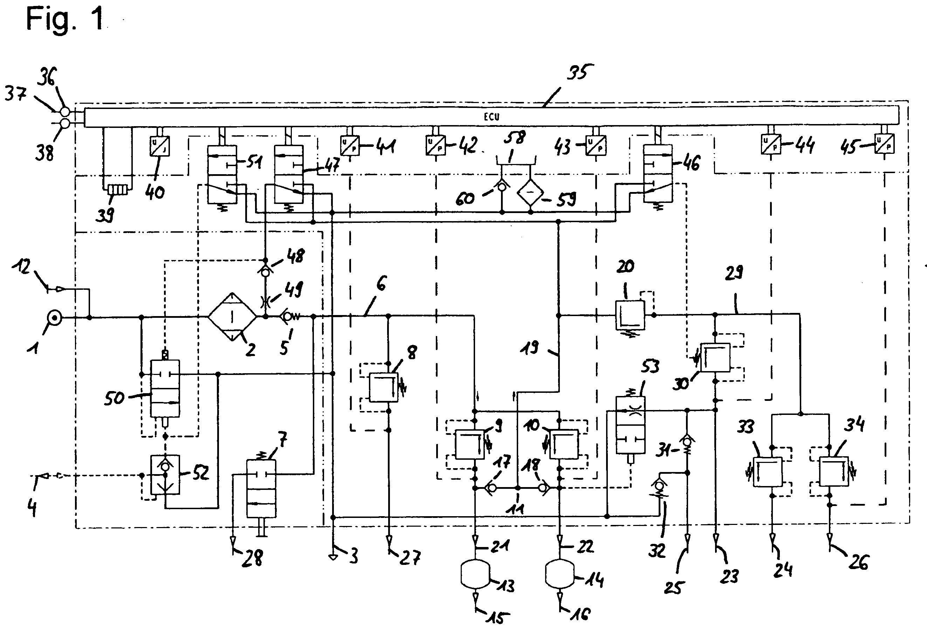

Figur 1 zeigt ein Schaltungsdiagramm eines ersten Ausführungsbeispiels einer erfindungsgemäßen Druckluftaufbereitungseinrichtung. Die erfindungsgemäße Druckluftaufbereitungseinrichtung hat einen Drucklufteingang 1, dem Druckluft von einem nicht dargestellten Kompressor zuführbar ist. Parallel zu dem Drucklufteingang 1 ist ein Fremdbefüllungsanschluss 12 vorgesehen, über den das Druckluftsystem des Nutzfahrzeugs beispielsweise in einer Werkstatt ohne den Betrieb des Kompressors befüllt werden kann. Über den Drucklufteingang 1 gelangt Druckluft zu einer Lufttrocknereinheit 2 und von dort über ein Rückschlagventil 5 und eine Hauptleitung 6 zu den später erläuterten Druckluftverbrauchern. Das Rückschlagventil 5 ist vorgesehen, um ein Rückströmen von Druckluft von den Verbrauchern in Richtung der Lufttrocknereinheit 2 zu vermeiden, wobei es sich vorzugsweise um ein federvorgespanntes Rückschlagventil handelt, welches ein Durchströmen erst ab Erreichen eines bestimmten Druckschwellenwertes gestattet. Von der Hauptleitung 6 zweigt eine zu einem Reifenfüllanschluss 28 führende Leitung ab, in der ein Reifenfüllventil 7 angeordnet ist. Das Reifenfüllventil 7 ist vorzugsweise ein 2/2-Wegeventil mit manueller Betätigung und kann bei Bedarf aus einer geschlossenen in eine geöffnete Stellung geschaltet werden, um über den Reifenfüllanschluss 28 Druckluft zur Befüllung von Fahrzeugreifen zu entnehmen. Des Weiteren ist in einer von der Hauptleitung 6 abzweigenden und zu einem Luftfederungsanschluss 27 führenden Leitung ein Luftfederungsventil 8 angeordnet. Das Luftfederungsventil 8 ist vorzugsweise ein Überströmventil, so dass, wenn an dem mit der Hauptleitung 6 verbundenen Eingang des Luftfederungsventils 8 die Druckluft einen bestimmten vorbestimmten Öffnungsdruck übersteigt, das Luftfederungsventil 8 von einer geschlossenen in eine geöffnete Stellung schaltet und ein Überströmen von Druckluft von der Hauptleitung 6 zum Luftfederungsanschluss 27 erlaubt. Das Luftfederungsventil 8 bleibt solange in einem geöffneten Zustand, bis ein Schließdruck unterschritten wird, wobei der Schließdruck kleiner ist als der Öffnungsdruck. Diese allgemeine Funktionsweise dieses Überströmventils gilt in übertragener Weise auch für die nachfolgend beschriebenen Überströmventile. Die Überströmventile wirken somit als Kreissicherungsventile, um die Betriebskreise, die ihnen nachgeschaltet sind, zu sichern. Diese Sicherung wird bewirkt, indem die Überströmventile schließen, sobald der Druck im entsprechenden Leitungsstrang unter den Schließdruck abfällt, d.h. im Falle einer Leckage und dem damit verbundenen Druckabfall in diesem Leitungsstrang, wird dieser Leitungsstrang von der Druckluftversorgung und den anderen Kreisen getrennt. Weiter stromabwärts zweigen von der Hauptleitung 6 zwei parallel angeordnete Betriebsbremsventile 9 und 10 ab, welche vorzugsweise Überströmventile sind. Die Ausgangsseiten der Betriebsbremsventile 9 und 10 führen jeweils zu einem Betriebsbremsanschluss 21, 22. Die Betriebsbremsanschlüsse 21, 22 führen jeweils zu einem Betriebsbremsbehälter 13, 14, an die die Betriebsbremskreise 15, 16 angeschlossen sind. Zwischen den jeweiligen Betriebsbremsventilen 9, 10 und ihren entsprechenden Betriebsbremsanschlüssen 21, 22 zweigt jeweils eine Leitung ab, wobei sich beide Leitungen in einem Verbindungspunkt 11 treffen. Zwischen den Abzweigungen und dem Verbindungspunkt 11 sind jeweils Rückschlagventile 17, 18 angeordnet, die jeweils ein Strömen von Druckluft hin zum Verbindungspunkt 11 gestatten und ein Strömen in die umgekehrte Richtung verhindern. Vom Verbindungspunkt 11 zweigt eine Seriellversorgungsleitung 19 ab, welche nachfolgend erläuterte weitere Verbraucher mit Druckluft versorgt. Somit ist ein Eingang eines Nebenverbraucher-Druckbegrenzers 20 an die Seriellversorgungsleitung 19 gekoppelt. Der Ausgang des Nebenverbraucher-Druckbegrenzers 20 ist mit einer Nebenverbraucherleitung 29 verbunden, von der eine Leitung abzweigt, die zu einem Anhängeranschluss 23 führt und in der ein Nebenverbraucherventil 30 angeordnet ist. Das Nebenverbraucherventil 30 ist vorzugsweise als Überströmventil ausgeführt, dessen Schaltverhalten mittels eines Steuereingangs einstellbar ist. An den Anhängeranschluss 23 kann eine nicht dargestellte Anhängerbremsanlage angeschlossen werden. Zwischen Nebenverbraucherventil 30 und Anhängeranschluss 23 zweigt eine Leitung ab, die zu einem Feststellbremsenanschluss 25 führt, wobei in dieser Leitung ein Rückschlagventil 31 vorgesehen ist, welches nur eine Strömung in Richtung hin zum Feststellbremsenanschluss 25 zulässt. Das Rückschlagventil 31 ist vorzugsweise ein federvorgespanntes Rückschlagventil, so dass ein Durchströmen des Rückschlagventils 31 erst ab Erreichen eines bestimmten Schwellenwerts gestattet wird. Durch Druckbeaufschlagung des Feststellbremsenanschlusses 25 wird eine Feststellbremse aus der arretierten Stellung gelöst. Zwischen Rückschlagventil 31 und Feststellbremsenanschluss 25 zweigt eine zu einer Entlüftung 3 führende Leitung ab, in die ein Rückschlagventil 32 geschaltet ist. Das Rückschlagventil 32 öffnet ab einem bestimmten, einstellbaren Schwellenwert und schützt so die mit dem Feststellbremsenanschluss 25 verbundene Leitung vor überhöhtem Druck. Der Schwellenwert zum Öffnen des Rückschlagventils 32 wird dabei höher eingestellt, als der entsprechende Schwellenwert des Rückschlagventils 31. Das Rückschlagventil 32 fungiert demnach als Sicherheitsventil, wobei dem Fachmann auch Sicherheitsventile mit anderen Ausgestaltungen bekannt sind, die an dieser Stelle nicht näher erläutert werden. Darüber hinaus zweigt zwischen Nebenverbraucherventil 30 und Anhängeranschluss 23 eine zur Entlüftung 3 führende Leitung ab, in der ein als 2/2-Wegeventil ausgeführtes Ventil 53 angeordnet ist. Die Steuerleitung des Ventils 53 ist mit der Leitung zwischen dem Betriebsbremsventil 10 und dem Betriebsbremsanschluss 22 verbunden, so dass abhängig vom Druck am Betriebsbremsanschluss 22 das Ventil 53 entweder in eine geschlossene Stellung schaltet, in der es verhindert, dass Druckluft aus der mit dem Anhängeranschluss 23 verbundenen Anhängerbremsanlage zur Entlüftung abströmt, während das Ventil 53 im anderen Schaltzustand ein gedrosseltes Abströmen von Druckluft aus der mit dem Anhängeranschluss 23 verbundenen Anhängerbremsanlage zur Entlüftung 3 gestattet. Bei Druckbeaufschlagung des Betriebsbremsanschlusses 22 schaltet dabei das Ventil 53 in seine geschlossene Stellung. Alternativ kann der Steuereingang des Ventils 53 anstatt mit dem Betriebsbremsanschluss 22 ebenso mit dem Betriebsbremsanschluss 21 verbunden sein. Von der Nebenverbraucherleitung 29 zweigen des Weiteren zwei parallel angeordnete Leitungen ab, von denen eine zu einem Zusatzverbraucheranschluss 24 und die andere zu einem Getriebeschaltungsanschluss 26 führt. Zwischen Nebenverbraucherleitung 29 und Zusatzverbraucheranschluss 24 ist ein Zusatzverbraucherventil 33 vorgesehen, während zwischen Nebenverbraucherleitung 29 und Getriebeschaltungsanschluss 26 ein Getriebeschaltungsventil 34 angeordnet ist. Beide Ventile sind vorzugsweise Überströmventile. Bezugszeichen 35 kennzeichnet eine elektronische Steuereinheit (ECU) zum Steuern des Betriebs der Luftaufbereitungseinrichtung. Die elektronische Steuereinheit 35 ist mit einem Zentralstecker 36 verbunden, über den die elektronische Steuereinheit 35 beispielsweise mit einem CAN-Bus 37 verbunden werden kann, um eine Schnittstelle zur sonstigen Fahrzeugelektronik auszubilden. Es ist ferner ein optionaler Feuchtestecker 38 vorgesehen, über den ein Signal eines externen nicht dargestellten Feuchtesensors eingelesen werden kann. Dieser ist üblicherweise am tiefsten Punkt eines der Betriebsbremsbehälter 13, 14 angebracht. Mit der elektronischen Steuereinheit 35 stehen ferner eine Heizung 39 sowie ein Temperatursensor 40 in Verbindung. Darüber hinaus sind mit der elektronischen Steuereinheit 35 diverse Drucksensoren 41-45 verbunden, wobei der Drucksensor 41 einen Druck am Luftfederungsanschluss 27, der Drucksensor 42 einen Druck am Betriebsbremsanschluss 21, der Drucksensor 43 einen Druck am Betriebsbremsanschluss 22, der Drucksensor 44 einen Druck am Anhängeranschluss 23 und der Drucksensor 45 einen Druck am Getriebeschaltungsanschluss 26 erfasst und in die elektronische Steuereinheit 35 zur Auswertung einspeist. Von der elektronischen Steuereinheit 35 wird ein Nebenverbraucher-Vorsteuerventil 46 geschaltet, welches als 3/2-Wege-Magnetventil ausgeführt ist. In der in Figur 1 dargestellten Schaltstellung verbindet das Nebenverbraucher-Vorsteuerventil 46 einen Steuereingang des Nebenverbraucherventils 30 mit der Entlüftung 3. In der nicht in Figur 1 dargestellten Schaltstellung verbindet das Nebenverbraucher-Vorsteuerventil 46 den Steuereingang des Nebenverbraucherventils 30 mit der Seriellversorgungsleitung 19, wodurch der in der Seriellversorgungsleitung 19 herrschende Druck an den Steuereingang des Nebenverbraucherventils 30 angelegt wird und dieses Nebenverbraucherventil 30 daraufhin ein Überströmen von Druckluft von der Nebenverbraucherleitung 29 zu dem Anhängeranschluss 23 und dem Feststellbremsenanschluss 25 verhindert. Gleich nach dem Einschalten der Zündung wird das Nebenverbraucher-Vorsteuerventil 46 bestromt, so dass dem Steuereingang des Nebenverbraucherventils 30 Druckluft zugeführt wird. Damit soll verhindert werden, dass bei vorzeitig gelöster Handbremse in einem Zustand, in dem noch nicht genügend Druck aufgebaut ist, das Fahrzeug zunächst durch die Feststellbremse gebremst wird und im Laufe des Druckaufbaus, wenn sich der Fahrer eventuell nicht im Fahrersitz befindet, das Fahrzeug selbsttätig zu rollen beginnt. Erst wenn über das Nebenverbraucher-Vorsteuerventil 46 der Steuereingang des Nebenverbraucherventils 30 wieder entlüftet wird, kann die Feststellbremse über den Feststellbremsenanschluss 25 gelöst werden. Dazu ist jedoch nach dem Erreichen eines Druckes, der ausreicht, um die Bremsanlage über die Betriebsbremskreise 15 und 16 betätigen zu können, ein Bestätigungssignal durch den Fahrzeugführer erforderlich. Diese Funktionsweise der Feststellbremse wird als "Northland Parkbrake Function" bezeichnet. Zum Zwecke der Regeneration der Lufttrocknereinheit 2 ist ein Regenerationsventil 47 vorgesehen, welches als 3/2-Wege-Magnetventil ausgeführt ist. Das Regenerationsventil 47 ist mit einem Rückschlagventil 48 und einer Drossel 49 in Reihe geschaltet. Das Rückschlagventil 48 vermeidet während der Förderphasen des Kompressors ein Überströmen von Druckluft über das Regenerationsventil 47 zur Entlüftung 3. Die Drossel 49 ist vorgesehen, um die Strömungsgeschwindigkeit in einer die Regeneration begünstigenden Weise zu begrenzen. Stromaufwärts des Rückschlagventils 48, d.h. zwischen Rückschlagventil 48 und dem Regenerationsventil 47 ist eine Steuerleitung angeschlossen, die zu einem Ablassventil 50 führt. In der in Figur 1 dargestellten Schaltstellung des Regenerationsventils 47 ist somit die Steuerleitung des Ablassventils 50 mit der Entlüftung 3 verbunden, und das Rückschlagventil 48 verhindert, dass während der Förderphasen des Kompressors Druckluft über das Regenerationsventil 47 zur Entlüftung 3 überströmt. In der nicht in Figur 1 dargestellten Schaltstellung verbindet das Regenerationsventil 47 die Steuerleitung des Ablassventils 50 mit dem in der Seriellversorgungsleitung 19 herrschenden Druck. Außerdem wird dieser Druck ebenso an die Verbindungsleitung zwischen Lufttrocknereinheit 2 und Rückschlagventil 5 angelegt. Das Ablassventil 50 ist zwischen die Eingangsseite der Lufttrocknereinheit 2 und die Entlüftung 3 geschaltet. In der in Figur 1 dargestellten Schaltstellung ist diese Verbindung zwischen Eingangsseite der Lufttrocknereinheit 2 und Entlüftung 3 gesperrt, wohingegen in der nicht in Figur 1 dargestellten Schaltstellung die Eingangsseite der Lufttrocknereinheit 2 mit der Entlüftung 3 verbunden ist. Ferner ist ein Druckregler-Magnetventil 51 vorgesehen, welches als 3/2-Wege-Magnetventil ausgebildet ist und über die elektronische Steuereinheit 35 angesteuert wird. Über das Druckregler-Magnetventil 51 kann einem Kompressor-Steuerausgang 4 über ein Steuerventil 52 der in der Seriellversorgungsleitung 19 herrschende Druck zugeführt werden. Neben der Druckzuführung zum Kompressor-Steuerausgang 4 kann derselbe Druck mittels des Druckregler-Magnetventils 51 an einen weiteren Steuereingang des Ablassventils 50 angelegt werden. Dies geschieht in der nicht in Figur 1 dargestellten Schaltstellung des Druckregler-Magnetventils 51, wohingegen in der in Figur 1 dargestellten Schaltstellung der weitere Steuereingang des Ablassventils 50 sowie der entsprechende Eingang des Steuerventils 52 mit der Entlüftung 3 verbunden sind. Das Ablassventil 50 ist so ausgelegt, dass bei Anliegen eines Drucks an dem Steuereingang, der mittels des Druckregler-Magnetventils 51 geschaltet wird, das Ablassventil 50 auf jeden Fall in die geöffnete Schaltstellung geschaltet wird. Das Steuerventil 52 ist so ausgelegt, dass es bei fehlender Druckbeaufschlagung durch das Druckregler-Magnetventil 51 den Kompressor-Steuerausgang 4 mit der Entlüftung 3 verbindet, wobei auf diese Weise rasche Entlüftung und somit ein sicherer Betrieb des Kompressors im Hinblick auf seine Wiederinbetriebnahme zur Verfügung gestellt wird. Ein weiterer Anschluss des Steuerventils 52 ist zwischen der Entlüftung 3 und dem Ablassventil 50 angeschlossen und somit mit der Entlüftung 3 verbunden. Ferner ist ein Sammelbehälter 58 vorgesehen, der einen Innenraum des Gehäuses der elektronischen Steuereinheit 35 repräsentieren soll. Über ein Druckausgleichselement 59 ist der Sammelbehälter 58 mit der Entlüftung 3 verbunden, um Druckschwankungen innerhalb des Gehäuses der elektronischen Steuereinheit 35 auszugleichen. Das Druckausgleichselement 59 kann von Luft, jedoch nicht von Flüssigkeiten, durchströmt werden und soll das Gehäuse vor Beschädigungen schützen, die ansonsten durch Druckschwankungen, bedingt durch Höhen- oder Temperaturunterschiede, verursacht werden können. Aus Sicherheitsgründen ist der Sammelbehälter 58 zusätzlich mit einem Rückschlagventil 60 versehen, um Druckerhöhungen im Gehäuse der elektronischen Steuereinheit 35 auszugleichen, welche die maximale Durchströmrate des Druckausgleichselements 59 übersteigen. Dabei ist das Rückschlagventil so angeordnet, dass nur eine Strömung vom Sammelbehälter 58 zur Entlüftung 3 ermöglicht wird.

Die dargestellte Druckluftaufbereitungseinrichtung arbeitet wie folgt. Während des normalen Förderbetriebs fördert der Kompressor Druckluft in den Drucklufteingang 1. Folglich gelangt Druckluft durch die Lufttrocknereinheit 2 über das Rückschlagventil 5 zur Hauptleitung 6. Bei Erreichen eines vorbestimmten Druckes in der Hauptleitung 6 gestatten die Überströmventile 8, 9 und 10 ein Überströmen von Druckluft so dass über die Rückschlagventile 17, 18 schließlich auch an der Seriellversorgungsleitung 19 ein bestimmter Druck herrscht. Während des normalen Betriebs wird die Lufttrocknereinheit 2 mit Feuchtigkeit und Fremdpartikeln, beispielsweise Kompressoröl und dessen Zersetzungsprodukten, beladen. Um eine Regeneration der Lufttrocknereinheit 2 zu veranlassen, werden das Regenerationsventil 47 und das Druckregler-Magnetventil 51 in ihre nicht dargestellte Position überführt, so dass einerseits über das Regenerationsventil 47 die Regenerationsluftströmung durch das Rückschlagventil 48, die Drossel 49, die Lufttrocknereinheit 2, das aufgrund der Umschaltung des Druckregler-Magnetventils 51 ebenfalls umgeschaltete Ablassventil 50 und die Entlüftung 3 erfolgen kann. Mit der Umschaltung des Druckregler-Magnetventils 51 wird der Kompressor-Steuerausgang 4 druckbeaufschlagt, so dass während des Regenerationsbetriebs der Kompressor abgeschaltet bleibt. Zur Wiederaufnahme des Förderbetriebs nach der Regeneration werden das Regenerationsventil 47 und das Druckregler-Magnetventil 51 wieder in ihre dargestellten Stellungen überführt, so dass die mit ihnen in Verbindung stehenden Steuereingänge entlüftet werden, wobei die Entlüftung des Kompressor-Steuereingangs 4 auf direktem Wege ohne einen Umweg über ein Regenerationsventil erfolgen kann.

Zur Vermeidung von Wiederholungen wird auf die Beschreibung von Elementen, die im Zusammenhang mit Figur 1 beschrieben wurden, verzichten. Gleiche Bezugszeichen repräsentieren dabei in der vorliegenden Beschreibung gleiche Elemente.

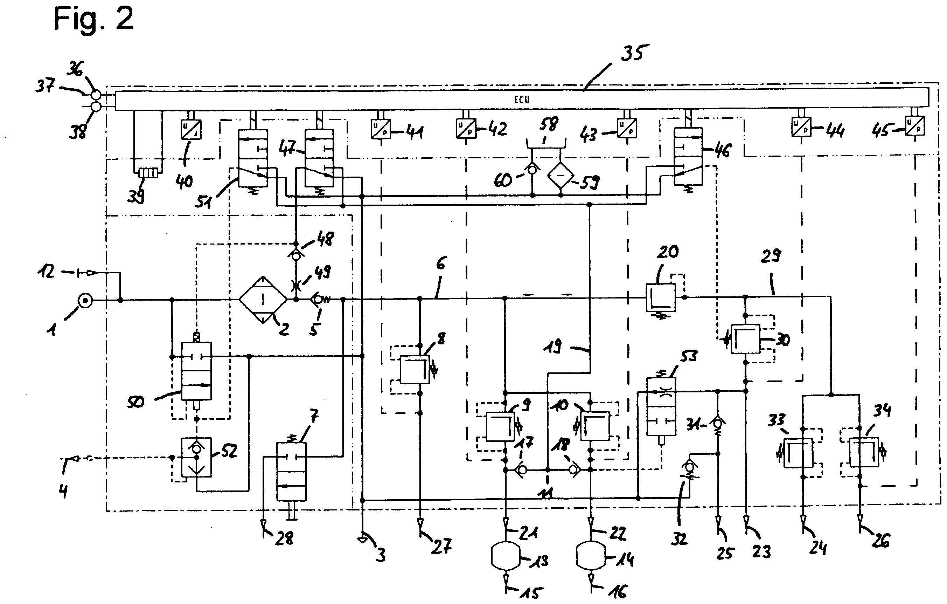

Figur 2 zeigt ein Schaltungsdiagramm eines zweiten Ausführungsbeispiels einer erfindungsgemäßen Druckluftaufbereitungseinrichtung. Die hier dargestellte Druckluftaufbereitungseinrichtung unterscheidet sich von der in Figur 1 dargestellten Druckluftaufbereitungseinrichtung dadurch, dass die Eingangseite des Nebenverbraucher-Druckbegrenzers 20 nicht wie in dem Ausführungsbeispiel aus Figur 1 mit der Seriellversorgungsleitung 19 verbunden ist, sondern mit der Hauptleitung 6. Dadurch sind die dem Nebenverbraucher-Druckbegrenzer 20 nachgeschalteten Verbraucher nicht mehr seriell zu den Betriebsbremsventilen 9 und 10 geschaltet, sondern parallel zu diesen.

In den nachfolgenden Figuren 3a bis 5c sind verschiedene Schaltungsvarianten der Schaltungen des ersten und zweiten Ausführungsbeispiels dargestellt. Die nachfolgende Tabelle 1 veranschaulicht dabei, welche Schaltungsvarianten miteinander kombinierbar sind.

**Tabelle 1:**

| | **Nebenverbraucher-Vorsteuerventil 46 in serieller Reihenschaltung mit Seriellversorgungsleitung 19** | **Fig. 5a** | **Fig. 5b** | **Fig. 5c** |
|---|---|---|---|---|
| **Fig. 3a** | Ja | Ja | Ja | Ja |
| **Fig. 3b** | Ja | Ja | Ja | Ja |
| **Fig. 3c** | Ja | Ja | Ja | Ja |
| **Fig. 3d** | Ja | Ja | Ja | Ja |
| **Fig. 4a** | Ja | Ja | Nein | Nein |
| **Fig. 4b** | Ja | Ja | Nein | Nein |
| **Fig. 4c** | Ja | Ja | Nein | Nein |

Figur 3a zeigt eine Schaltungsvariante der Schaltungen des ersten und zweiten Ausführungsbeispiels. In diesem Ausführungsbeispiel sind die dem Nebenverbraucher-Druckbegrenzer 20 nachgeschalteten Verbraucher zu den dem Nebenverbraucher-Druckbegrenzer 20 vorgeschalteten Verbrauchern parallel geschaltet. Bei dieser Schaltungsanordnung herrschen zwei Druckniveaus, wobei ein erstes Niveau an einer Eingangsseite des Nebenverbraucher-Druckbegrenzers 20 sowie in der Hauptleitung 6 anliegt und ein zweites Druckniveau an der Ausgangsseite und somit in der Nebenverbraucherleitung 29 anliegt.

Figur 3b zeigt eine weitere Schaltungsvariante der Schaltungen des ersten und zweiten Ausführungsbeispiels. Zusätzlich zu den Komponenten des ersten und zweiten Ausführungsbeispiels weist die Schaltungsvariante aus Figur 3b einen Druckbegrenzer 54 auf, der zwischen Hauptleitung 6 und Eingangsseite der Betriebsbremsventile 9, 10 angeordnet ist. Dem Druckbegrenzer 54 ist eine Reihenschaltung aus einer Drossel 55 und einem Rückschlagventil 56 parallel geschaltet, wobei das Rückschlagventil 56 so ausgerichtet ist, dass nur ein Strömen von der Ausgangsseite, d.h. die mit den Betriebsbremsventilen 9, 10 in Verbindung stehende Seite, zur Hauptleitung 6 zugelassen wird. Bei dieser Schaltungsvariante sind erneut die zu den Betriebsbremsanschlüssen 21, 22 führenden Leitungsstränge den Leitungssträngen, welche zum Anhängeranschluss 23, zum Zusatzverbraucheranschluss 24 und zum Getriebeschaltungsanschluss 26 führen, parallel geschaltet. Aufgrund des Druckbegrenzers 54 wird im Vergleich zur Schaltungsvariante aus Figur 3a ein weiteres Druckniveau ausgebildet. Die Schaltung weist demnach drei Druckniveaus auf, wobei ein erstes Druckniveau in der Hauptleitung 6, ein zweites Druckniveau an der Ausgangsseite des Nebenverbraucher-Druckbegrenzers 20 (und somit in der Nebenverbraucherleitung 29) und ein drittes Druckniveau an der Ausgangsseite des Druckbegrenzers 54 herrscht.

Figur 3c zeigt eine weitere Schaltungsvariante der Schaltungen des ersten und zweiten Ausführungsbeispiels. Bei dieser Schaltungsvariante sind die Leitungsstränge, welche zum Anhängeranschluss 23, zum Zusatzverbraucheranschluss 24 und zum Getriebeschaltungsanschluss 26 führen, seriell zu den Leitungssträngen, die zu den Betriebsbremsanschlüssen 21, 22 führen, geschaltet. Die Eingangsseite des Nebenverbraucher-Druckbegrenzers 20 wird erst dann mit Druck beaufschlagt, nachdem die Betriebsbremsventile 9, 10 ein Überströmen von Druckluft gestatten und somit an den Betriebsbremsanschlüssen 21, 22 Druckluft anliegt. Bei dieser Schaltungsvariante herrschen zwei Druckniveaus vor, wobei ein erstes Druckniveau in der Hauptleitung 6 und der Seriellversorgungsleitung 19 herrscht und ein weiteres Druckniveau an der Ausgangsseite des Nebenverbraucher-Druckbegrenzers 20 (und somit in der Nebenverbraucherleitung 29) herrscht.

Figur 3d zeigt eine weitere Schaltungsvariante der Schaltungen des ersten und zweiten Ausführungsbeispiels. Bei dieser Schaltungsvariante ist, wie in der Schaltungsvariante aus Figur 3b, ein Druckbegrenzer 54 mit der parallel geschalteten Reihenschaltung aus Drossel 55 und Rückschlagventil 56 vorgesehen. Der Druckbegrenzer 54 ist zwischen Hauptleitung 6 und Eingangsseite der Betriebsbremsventile 9, 10 vorgesehen. Die Leitungsstränge zu den Verbrauchern, die dem Nebenverbraucher-Druckbegrenzer 20 nachgeschaltet sind, sind den Leitungssträngen zu den Betriebsbremsanschlüssen 21, 22 seriell nachgeschaltet. Somit liegt an der Eingangsseite des Nebenverbraucher-Druckbegrenzers 20 erst dann Druckluft an, nachdem an den Betriebsbremsanschlüssen 21, 22 Druckluft anliegt. In dieser Schaltung herrschen drei Druckniveaus vor, wobei ein erstes Druckniveau in der Hauptleitung 6, ein zweites Druckniveau zwischen Ausgangsseite des Druckbegrenzers 54 und Eingangsseite des Nebenverbraucher-Druckbegrenzers 20 (und somit in der Seriellversorgungsleitung 19) und ein drittes Druckniveau an der Ausgangsseite des Nebenverbraucher-Druckbegrenzers 20 (und somit in der Nebenverbraucherleitung 29) herrscht.

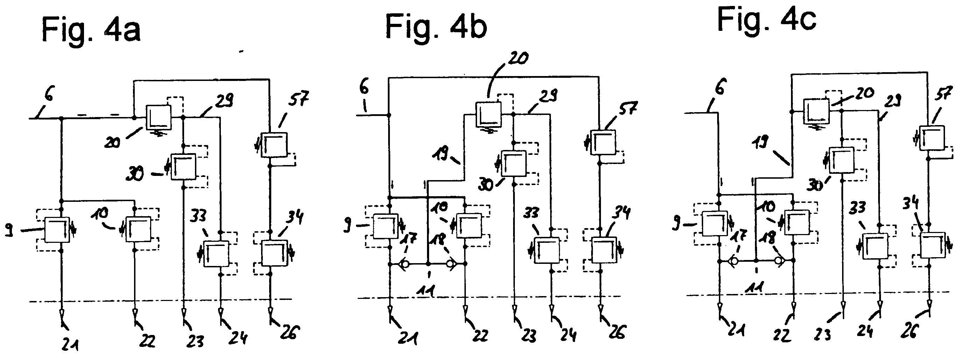

Figur 4a zeigt eine weitere Schaltungsvariante der Schaltungen des ersten und zweiten Ausführungsbeispiels. In der Schaltungsvariante aus Figur 4a sind die Leitungsstränge zu den Betriebsbremsanschlüssen 21, 22 parallel zu den zum Getriebeschaltungsanschluss 26 führenden Leitungsstrang und dem zum Anhängeranschluss 23 und zum Zusatzverbraucheranschluss 24 führenden Leitungsstrang geschaltet. Im Unterschied zu vorhergehenden Schaltungsvarianten ist der zum Getriebeschaltungsanschluss 26 führende Leitungsstrang nicht von der Nebenverbraucherleitung 29 abgezweigt, sondern von der Hauptleitung 6. Zwischen Hauptleitung 6 und Getriebeschaltungsventil 34 ist ein Getriebeschaltungs-Druckbegrenzer 57 zwischengeschaltet. Somit können bei dieser Schaltungsvariante drei verschiedene Druckniveaus ausgebildet werden. Ein erstes Druckniveau herrscht in der Hauptleitung 6 und somit auf der Eingangsseite des Nebenverbraucher-Druckbegrenzers 20 und der Eingangsseite des Getriebeschaltungs-Druckbegrenzers 57. Ein zweites Druckniveau herrscht auf der Ausgangsseite des Nebenverbraucher-Druckbegrenzers 20 und somit auch in der Nebenverbraucherleitung 29. Ein drittes Druckniveau wird auf der Ausgangsseite des Getriebeschaltungs-Druckbegrenzers 57 und somit auch am Getriebeschaltungsanschluss 26 ausgebildet.

Figur 4b zeigt eine weitere Schaltungsvariante der Schaltungen des ersten und zweiten Ausführungsbeispiels. Diese Schaltungsvariante unterscheidet sich von der aus Figur 4a dadurch, dass die Eingangsseite des Nebenverbraucher-Druckbegrenzers 20 nicht mit der Hauptleitung 6 verbunden ist, sondern von der Seriellversorgungsleitung 19 mit Druckluft versorgbar ist. Demnach ist der zum Getriebeschaltungsanschluss 26 führende Leitungsstrang den zu den Betriebsbremsanschlüssen 21, 22 führenden Leitungssträngen parallel geschaltet. Die dem Nebenverbraucher-Druckbegrenzer 20 nachgeschalteten Verbraucher sind den Leitungssträngen nachgeschaltet, welche zu den Betriebsbremsanschlüssen 21, 22 führen. Somit liegt an der Eingangsseite des Nebenverbraucher-Druckbegrenzer 20 erst dann Druckluft an, nachdem die Betriebsbremsventile 9, 10 ein Überströmen von Druckluft zulassen. Bei dieser Schaltungsvariante können drei verschiedene Druckniveaus herrschen. Ein erstes Druckniveau herrscht in der Hauptleitung 6 und somit an der Eingangsseite des Getriebeschaltungs-Druckbegrenzers 57, in den Leitungssträngen zu den Betriebsbremsanschlüssen 21, 22 und an der Eingangsseite des Nebenverbraucher-Druckbegrenzers 20. Ein zweites Druckniveau kann auf der Ausgangsseite des Nebenverbraucher-Druckbegrenzers 20 ausgebildet werden und ein drittes Druckniveau kann auf der Ausgangsseite des Getriebeschaltungs-Druckbegrenzers 57 ausgebildet werden.

Figur 4c zeigt eine weitere Schaltungsvariante der Schaltungen des ersten und zweiten Ausführungsbeispiels. Diese Schaltungsvariante unterscheidet sich von der aus Figur 4b dadurch, dass der zum Getriebeschaltungsanschluss 26 führende Leitungsstrang nicht mit der Hauptleitung 6 verbunden ist, sondern mit der Seriellversorgungsleitung 19 verbunden ist. Dadurch ist der zum Getriebeschaltungsanschluss 26 führende Leitungsstrang mit den dem Nebenverbraucher-Druckbegrenzer 20 nachgeschalteten Verbrauchern parallel geschaltet, jedoch sind all diese Verbraucher seriell zu den Leitungssträngen geschaltet, welche zu den Betriebsbremsanschlüssen 21, 22 führen. Auch bei dieser Schaltungsvariante können drei Druckniveaus ausgebildet werden. Ein erstes Druckniveau herrscht in der Hauptleitung 6 und somit in der Seriellversorgungsleitung 19, ein zweites Druckniveau herrscht auf der Ausgangsseite des Getriebeschaltungs-Druckbegrenzers 57 und ein drittes Niveau herrscht auf der Ausgangsseite des Nebenverbraucher-Druckbegrenzers 20.

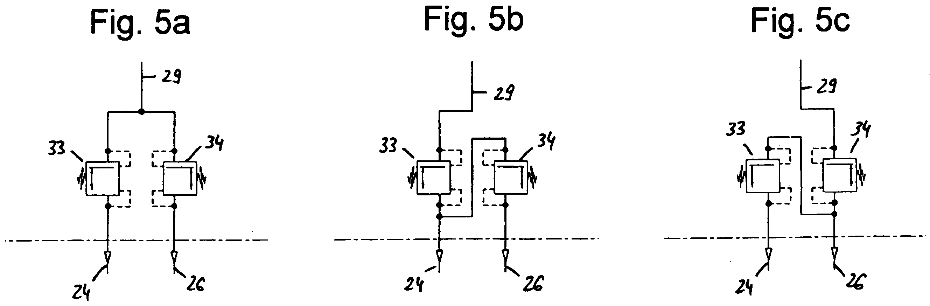

Figur 5a zeigt eine weitere Schaltungsvariante der Schaltungen des ersten und zweiten Ausführungsbeispiels. Bei dieser Schaltungsvariante sind die zum Getriebeschaltungsanschluss 26 und zum Zusatzverbraucheranschluss 24 führenden Leitungsstränge parallel geschaltet, wie bereits in Figur 1 und Figur 2 dargestellt.

Figur 5b zeigt eine weitere Schaltungsvariante der Schaltungen des ersten und zweiten Ausführungsbeispiels. Bei dieser Schaltungsvariante ist die Eingangsseite des Getriebeschaltungsventils 34 mit der Ausgangsseite des Zusatzverbraucherventils 33 bzw. mit den Zusatzverbraucheranschluss 24 verbunden. Somit ist der Leitungsstrang für die Getriebeschaltung dem Zusatzverbraucherventil 33 nachgeschaltet.

Figur 5c zeigt eine weitere Schaltungsvariante der Schaltungen des ersten und zweiten Ausführungsbeispiels. Bei dieser Schaltungsvariante ist die Eingangsseite des Zusatzverbraucherventils 33 mit der Ausgangsseite des Getriebeschaltungsventils 34 bzw. mit den Getriebeschaltungsanschluss 26 verbunden. Somit ist der zum Zusatzverbraucheranschluss 24 führende Leitungsstrang dem Getriebeschaltungsventil 34 nachgeschaltet.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 1: Drucklufteingang
- 2: Lufttrocknereinheit
- 3: Entlüftung
- 4: Kompressor-Steuerausgang
- 5: Rückschlagventil
- 6: Hauptleitung
- 7: Reifenfüllventil
- 8: Luftfederungsventil
- 9: Betriebsbremsventil
- 10: Betriebsbremsventil
- 11: Verbindungspunkt
- 12: Fremdbefüllungsanschluss
- 13: Betriebsbremsbehälter
- 14: Betriebsbremsbehälter
- 15: Betriebsbremskreis
- 16: Betriebsbremskreis
- 17: Rückschlagventil
- 18: Rückschlagventil
- 19: Seriellversorgungsleitung
- 20: Nebenverbraucher-Druckbegrenzer
- 21: Betriebsbremsanschluss
- 22: Betriebsbremsanschluss
- 23: Anhängeranschluss
- 24: Zusatzverbraucheranschluss
- 25: Feststellbremsenanschluss
- 26: Getriebeschaltungsanschluss
- 27: Luftfederungsanschluss
- 28: Reifenfüllanschluss
- 29: Nebenverbraucherleitung
- 30: Nebenverbraucherventil
- 31: Rückschlagventil
- 32: Rückschlagventil
- 33: Zusatzverbraucherventil
- 34: Getriebeschaltungsventil
- 35: Elektronische Steuereinheit
- 36: Zentralstecker
- 37: CAN-Bus
- 38: Feuchtestecker
- 39: Heizung
- 40: Temperatursensor
- 41: Drucksensor
- 42: Drucksensor
- 43: Drucksensor
- 44: Drucksensor
- 45: Drucksensor
- 46: Nebenverbraucher-Vorsteuerventil
- 47: Regenerationsventil
- 48: Rückschlagventil
- 49: Drossel
- 50: Ablassventil
- 51: Druckregler-Magnetventil
- 52: Steuerventil
- 53: Ventil
- 54: Druckbegrenzer
- 55: Drossel
- 56: Rückschlagventil
- 57: Getriebeschaltungs-Druckbegrenzer
- 58: Sammelbehälter
- 59: Druckausgleichselement
- 60: Rückschlagventil

## Patentansprüche

1. Druckluftaufbereitungseinrichtung zum Versorgen einer Kraftfahrzeugbremsanlage mit Druckluft, mit
- zwei zur Versorgung einer Betriebsbremsanlage vorgesehenen Betriebsbremsanschlüssen (21, 22),
- einem Nebenverbraucherventil (30) zum Steuern der Druckluftzufuhr an zumindest einen Nebenverbraucheranschluss (23, 25),
- einem Nebenverbraucher-Vorsteuerventil (46), um einem Steuereingang des Nebenverbraucherventils (30) wahlweise Druckluft über eine Seriellversorgungsleitung (19) zuzuführen, wobei die Seriellversorgungsleitung (19) mit einem Verbindungspunkt (11) verbunden ist, der mit beiden Betriebsbremsanschlüssen (21, 22) verbunden ist,
**dadurch gekennzeichnet, dass** jeweils zwischen den Betriebsbremsanschlüssen (21, 22) und dem Verbindungspunkt (11) ein Rückschlagventil (17, 18) vorgesehen ist.

2. Druckluftaufbereitungseinrichtung gemäß Anspruch 1, **dadurch gekennzeichnet, dass** den Betriebsbremsanschlüssen (21, 22) jeweils ein Betriebsbremsventil (9, 10) vorgeschaltet ist, das so angeordnet ist, dass dessen den Betriebsbremsanschlüssen (21, 22) zugewandte Ausgangsseite mit dem Verbindungspunkt (11) verbunden ist.

3. Druckluftaufbereitungseinrichtung gemäß Anspruch 2, **dadurch gekennzeichnet, dass** die Betriebsbremsventile (9, 10) Überströmventile sind.

4. Druckluftaufbereitungseinrichtung gemäß einem der vorhergehenden Ansprüche, **dadurch gekennzeichnet, dass** eine Eingangsseite eines dem Nebenverbraucheranschluss (23, 25) vorgeschalteten Nebenverbraucher-Druckbegrenzers (20) an die Seriellversorgungsleitung (19) gekoppelt ist.

5. Druckluftaufbereitungseinrichtung gemäß einem der Ansprüche 1 bis 3, **dadurch gekennzeichnet, dass** eine Eingangsseite eines dem Nebenverbraucheranschluss (23, 25) vorgeschalteten Nebenverbraucher-Druckbegrenzers (20) an eine Hauptleitung (6) gekoppelt ist.

6. Druckluftaufbereitungseinrichtung gemäß Anspruch 4 oder 5, **dadurch gekennzeichnet, dass** ein Zusatzverbraucheranschluss (24) und ein Getriebeschaltungsanschluss (26) parallel zueinander an die Ausgangsseite des Nebenverbraucher-Druckbegrenzers (20) gekoppelt sind.

7. Druckluftaufbereitungseinrichtung gemäß Anspruch 4 oder 5, **dadurch gekennzeichnet, dass** ein Zusatzverbraucheranschluss (24) und ein Getriebeschaltungsanschluss (26) vorgesehen sind, wobei eine Zuleitung zu dem Zusatzverbraucheranschluss (24) an die Ausgangsseite des Nebenverbraucher-Druckbegrenzers (20) gekoppelt ist und eine Zuleitung zu dem Getriebeschaltungsanschluss (26) mit der Eingangsseite des Nebenverbraucher-Druckbegrenzers (20) verbunden ist.

8. Druckluftaufbereitungseinrichtung gemäß Anspruch 4 oder 5, **dadurch gekennzeichnet, dass** ein Zusatzverbraucheranschluss (24) und ein Getriebeschaltungsanschluss (26) vorgesehen sind, wobei die Zuleitung zu einem der beiden Anschlüsse (24, 26) an eine Ausgangsseite eines Ventils (33, 34) gekoppelt ist, welches dem anderen der beiden Anschlüsse (24, 26) vorgeschaltet ist.

9. Druckluftaufbereitungseinrichtung gemäß einem der vorhergehenden Ansprüche, **dadurch gekennzeichnet, dass** der Nebenverbraucheranschluss (23, 25) zumindest einen Anschluss aus der Gruppe aufweist, die einen Anhängeranschluss (23) zur Versorgung einer Anhängerbremsanlage mit Druckluft und einen Feststellbremsenanschluss (25) zur Versorgung einer Feststellbremse zum Lösen dieser umfasst.

10. Kraftfahrzeug mit einer Druckluftaufbereitungseinrichtung gemäß einem der vorhergehenden Ansprüche.

## Claims

1. Compressed air treatment device for supplying compressed air to the braking system of a motor vehicle, the device comprising
- two service brake connections (21, 22) provided for the supply of a service braking system,
- a secondary user valve (30) for controlling the compressed air supply to at least one secondary user connection (23, 25),
- a secondary user pilot valve (46) for optionally supplying compressed air to a control inlet of the secondary user valve (30) via a serial supply line (19), the serial supply line (19) being connected to a connecting point (11), which is connected to both service brake connections (21, 22),
**characterised in that** a non-return valve (17, 18) is provided between each of the service brake connections (21, 22) and the connecting point (11).

2. Compressed air treatment device according to claim 1, **characterised in that** upstream of each of the service brake connections (21, 22) a service brake valve (9, 10) is provided, which is arranged such that its outlet side facing the service brake connections (21, 22) is connected to the connecting point (11).

3. Compressed air treatment device according to claim 2, **characterised in that** the service brake valves (9, 10) are overflow valves.

4. Compressed air treatment device according to any of the preceding claims, **characterised in that** an inlet side of a secondary user pressure limiting valve (20) provided upstream of the secondary user connection (23, 25) is coupled to the serial supply line (19).

5. Compressed air treatment device according to any of claims 1 to 3, **characterised in that** an inlet side of a secondary user pressure limiting valve (20) provided upstream of the secondary user connection (23, 25) is coupled to a main line (6).

6. Compressed air treatment device according to claim 4 or 5, **characterised in that** a secondary user connection (24) and a gearbox shifting connection (26) are coupled in parallel to the outlet side of the secondary user pressure limiting valve (20).

7. Compressed air treatment device according to claim 4 or 5, **characterised in that** a secondary user connection (24) and a gearbox shifting connection (26) are provided, wherein a feed line to the secondary user connection (24) is coupled to the outlet side of the secondary user pressure limiting valve (20) and a feed line to the gearbox shifting connection (26) is connected to the inlet side of the secondary user pressure limiting valve (20).

8. Compressed air treatment device according to claim 4 or 5, **characterised in that** a secondary user connection (24) and a gearbox shifting connection (26) are provided, wherein a feed line to one of the two connections (24, 26) is coupled to an outlet side of a valve (33, 34), which is located upstream of the other of the two connections (24, 26).

9. Compressed air treatment device according to any of the preceding claims, **characterised in that** the secondary user connection (23, 25) comprises at least one connection from the group including a trailer connection (23) for supplying compressed air to a trailer braking system and a parking brake connection (25) for supplying a parking brake for the release thereof.

10. Motor vehicle comprising a compressed air treatment device according to any of the preceding claims.

## Revendications

1. Dispositif de conditionnement d'air comprimé pour alimenter un système de freinage de véhicule automobile en air comprimé, comprenant
- deux raccords (21, 22) de frein de service prévus pour alimenter un système de freinage de service,
- une vanne (30) de consommateur secondaire pour commander l'envoi d'air comprimé à au moins un raccord (23, 25) de consommateur secondaire,
- une vanne (46) pilote de consommateur secondaire pour envoyer à une entrée de commande de la vanne (30) de consommateur secondaire, au choix, de l'air comprimé par un conduit (19) d'alimentation série, le conduit (19) d'alimentation série étant relié à un point (11) de liaison, qui est relié aux deux raccords (21, 22) de frein de service,
**caractérisé en ce que** respectivement un clapet antiretour (17, 18) est prévu entre les raccords (21, 22) de frein de service et le point (11) de liaison.

2. Dispositif de conditionnement d'air comprimé suivant la revendication 1, **caractérisé en ce que**, en amont des raccords (21, 22) de frein de service, est montée respectivement une vanne (9, 10) de frein de service disposée de manière à ce que son côté de sortie, tourné vers les raccords (21, 22) de frein de service, soit relié au point (11) de liaison.

3. Dispositif de conditionnement d'air comprimé suivant la revendication 2, **caractérisé en ce que** les vannes (9, 10) sont des vannes de décharge.

4. Dispositif de conditionnement d'air comprimé suivant l'une des revendications précédentes, **caractérisé en ce qu'**un côté d'entrée d'un limiteur (20) de pression de consommateur secondaire, monté en amont du raccord (23, 25) de consommateur secondaire, est couplé au conduit (19) d'alimentation série.

5. Dispositif de conditionnement d'air comprimé suivant l'une des revendications précédentes, **caractérisé en ce qu'**un côté d'entrée d'un limiteur (20) de pression de consommateur secondaire, monté en amont du raccord (23, 25) de consommateur secondaire, est couplé à un conduit (6) principal.

6. Dispositif de conditionnement d'air comprimé suivant la revendication 4 ou 5, **caractérisé en ce qu'**un raccord (24) de consommateur supplémentaire et un raccord (26) de branchement d'une transmission en parallèle entre eux sont couplés au côté de sortie du limiteur (20) de pression du consommateur secondaire.

7. Dispositif de conditionnement d'air comprimé suivant la revendication 4 ou 5, **caractérisé en ce qu'**il est prévu un raccord (24) de consommateur supplémentaire et un raccord (26) de branchement d'une transmission, un conduit d'envoi au raccord (24) de consommateur supplémentaire étant couplé au côté de sortie du limiteur (20) de pression de consommateur secondaire et un conduit d'envoi au raccord (26) de branchement d'une transmission étant relié au côté d'entrée du limiteur (20) de pression du consommateur secondaire.

8. Dispositif de conditionnement d'air comprimé suivant la revendication 4 ou 5, **caractérisé en ce qu'**il est prévu un raccord (24) de consommateur supplémentaire et un raccord (26) de branchement de transmission, le conduit d'envoi à l'un des deux raccords (24, 26) étant couplé à un côté de sortie d'une vanne (33, 34), qui est montée en amont de l'autre des deux raccords (24, 26).

9. Dispositif de conditionnement d'air comprimé suivant l'une des revendications précédentes, **caractérisé en ce que** le raccord (23, 25) de consommateur secondaire a au moins un raccord choisi dans le groupe, qui comprend un raccord (23) de remorque, pour l'alimentation d'un système de freinage d'une remorque en air comprimé, et un raccord (25) de frein de stationnement, pour l'alimentation d'un frein de stationnement en vue de le desserrer.

10. Véhicule automobile ayant un dispositif de conditionnement d'air comprimé suivant l'une des revendications précédentes.
